# EUROPÄISCHE PATENTSCHRIFT

(11) **EP 1 931 940 B1**
(45) Veröffentlichungstag und Bekanntmachung des Hinweises auf die Patenterteilung: **23.11.2016**
(21) Anmeldenummer: 06792227.8
(22) Anmeldetag: 20.09.2006
(51) Int. Cl.: G01B 11/00

(54) **VORRICHTUNG ZUR MESSUNG UND/ODER ÜBERWACHUNG VON RÄUMLICHEN AUSDEHNUNGSMERKMALEN VON LEIMSPUREN AUF WERKSTÜCKEN**
APPARATUS FOR MEASURING AND/OR MONITORING THREE-DIMENSIONAL EXPANSION FEATURES OF GLUE TRACES ON WORKPIECES
DISPOSITIF DE MESURE ET/OU DE SURVEILLANCE DES CARACTERISTIQUES DE DILATATION SPATIALE DE TRACES DE COLLE SUR DES PIECES

(30) Priorität: 29.09.2005 DE 102005046660
(43) Veröffentlichungstag der Anmeldung: 18.06.2008
(73) Patentinhaber: Windmöller & Hölscher KG, 49525 Lengerich (DE)
(72) Erfinder: LAMKEMEYER, Andreas, 49082 Osnabrück (DE); DUWENDAG, Rüdiger, 49525 Lengerich (DE); DAHER, Marco, 49565 Bramsche (DE); MAURITZ, Jakob, 49076 Osnabrück (DE)
(86) Internationale Anmeldenummer: PCT/EP2006/009224
(87) Internationale Veröffentlichungsnummer: WO 2007/036329

(56) Entgegenhaltungen:
- EP-A- 0 943 912
- EP-A2- 0 852 333
- WO-A-2005/087460
- DE-C1- 4 304 678
- GB-A- 2 289 941
- NL-C1- 1 016 532

## Beschreibung

Die Erfindung betrifft eine Vorrichtung zur Messung von räumlichen Ausdehnungsmerkmalen des Leimauftrages auf Werkstücken. Statt dem langen Begriff "räumliche Ausdehnungsmerkmale des Leimauftrages" werden im Folgenden des Öfteren die Worte "Leimauftragsgeometrie" oder "Leimgeometrie" verwendet.

Insbesondere die Schichtdicke des Leimauftrages und die Kontur des Leimauftrages sind räumliche Ausdehnungsmerkmale des Leimauftrages, also Merkmale der Leimauftraggeometrie.

Unter Leimkontur werden hierbei die Form und oft auch die Lage des Leimauftrags auf dem Werkstück verstanden. Die Dicke der Leimschicht kann unter Umständen auch zwischen unterschiedlichen Flächenbereichen innerhalb der Leimkonturen variieren. Anhand dieser Definition ist zu verstehen, dass die Schichtdicke außerhalb der Leimkonturen - zumindest kurz nach dem Auftragen des Leims - gleich Null ist.

Schon seit längerer Zeit wird versucht, die Eigenschaften des Leimauftrages, den die Beleimungsvorrichtungen auf Werkstücken hinterlassen, zu erfassen. Auf diese Weise soll den jeweiligen Bedienern oder Steuervorrichtungen der Beleimungsvorrichtungen die Möglichkeit gegeben werden, die Kontur und/oder die Schichtdicke des Leimauftrags zu messen und gegebenenfalls die Beleimungsvorrichtung in geeigneter Weise zu steuern beziehungsweise zu regeln. In diesem Zusammenhang ist zu betonen, dass der Nutzen einer adäquaten Einstellung der Leimschichtdicke natürlich zunächst in dem effizienten Leimeinsatz durch eine optimierte Leimmenge und damit in Leimeinspaarungen besteht. Dasselbe gilt für die Kontrolle der Leimkontur, die ja auf die Kontur der eigentlichen Klebefläche abgestimmt sein soll.

Zu der Klebstoffersparnis treten jedoch vor allem bei der Produktion von Zellulosesäcken und -beuteln noch eine deutlich sicherere und stabilere Performance der Endprodukte sowie - insbesondere im Lebensmittelbereich - gesundheitliche Aspekte hinzu. Insbesondere bei der Produktion von Säcken ohne eine adäquate Regelung von Leimschichtdicke und Leimauftragskontur tendieren Maschinenbediener eher dazu, etwas zu viel Leim aufzutragen, um eben in jedem Fall stabile Klebestellen herbeizuführen.

Aufgrund des hohen Wassergehalts der vielfach verwendeten Leime, bei denen oft Stärkeleime führend sind, führt der hohe Klebstoffauftrag jedoch zu einer zu großen Durchfeuchtung der Säcke, was auch zu einem Reißen der Säcke führen kann.

Eine weitere Gefahr ist ein Befall des Zellulosematerials durch Pilze in Folge der Durchfeuchtung, da die Säcke oft sowohl vor als auch nach dem Befüllen lange gelagert werden können. Der Pilzbefall führt in jedem Fall zu einer weiteren Schwächung des Materials und hat, wie erwähnt, insbesondere bei der Einlagerung von Lebensmitteln in den Säcken auch Auswirkungen auf die Gesundheit des Endverbrauchers.

Aus diesen Gründen beschäftigt sich der Fachmann seit geraumer Zeit mit der Messung der Leimauftragsgeometrie.

Die DE 198 05 321 C1 befasst sich mit der Messung der Leimkontur und schlägt den Auftrag angewärmten Leims sowie die Erfassung desselben mit einer Wärmebildkamera vor. Zusammenfassend ist also zu sagen, dass sich das in dieser Druckschrift vorgestellte Verfahren darauf stützt, Temperaturunterschiede zwischen Leim und beleimten Material zu erkennen. Ausschlaggebend für die Funktion dieses Verfahrens ist die "Wärmestrahlung", also eine in der Experimentalphysik oft als "Strahlung des Schwarzen Körpers" bezeichnete "Eigenstrahlung" der von der Wärmebildkamera erfassten Objekte, die ja in diesem Fall von dem Leim ausgeht.

Die verwendeten Wärmebildkameras sind teuer und die Anwärmung des Leims ist oft unerwünscht. Des Weiteren erscheint die Eignung des Verfahrens zur Bestimmung der Leimschichtdicke zweifelhaft, und auch bei der Güte der Leimkonturerkennung besteht noch Verbesserungspotential.

Die Druckschriften WO 2005/087460 A1, DE 43 04 678 C1, GB 2 289 941 A, NL 1016532 und EP 0 852 333 A2 zeigen jeweils Kameras oder einzelne Sensoren, die entweder das Vorhandensein einer Leimkontur bewerten oder die Lage und die Dimensionen des Leimprofils bestimmen.

Die EP 0 943 912 A1, von der die vorliegende Erfindung ausgeht, offenbart eine Strahlungsquelle, die mit Strahlung zweier verschiedener Wellenlängen das Vorhandensein von wasserhaltigem Leim auf der Oberfläche der Werkstücke durch die Differenzbildung der Reflexionssignale beider Wellenlängen bestimmt. Räumliche Ausdehnungsmerkmale des Leimauftrags können damit jedoch nicht erkannt werden.

Daher besteht die Aufgabe der vorliegenden Erfindung darin, eine Vorrichtung vorzuschlagen, welche räumliche Ausdehnungsmerkmale des Leimauftrages auf den Werkstücken besser erkennt, so dass Unregelmäßigkeiten in der Leimkontur behoben werden können.

Die vorliegende Erfindung löst diese Aufgabe durch die Merkmale der Ansprüche 1 und 16.
Im Rahmen der Offenbarung der Erfindung bildet der Begriff "räumliche Ausdehnungsmerkmale des Leimauftrages" wieder den Oberbegriff insbesondere zu Leimkontur und Leimschichtdicke. Dies bedeutet jedoch keineswegs, dass diese beiden Größen immer gemeinsam gemessen werden müssen. Vielmehr kann auch eine exklusive Messung einer dieser beiden Größen - oder anderer räumlicher Ausdehnungsmerkmale des Leimauftrags - im Sinne der vorliegenden Erfindung sein.
Das Begriffspaar "Messung und/oder Überwachung" zeigt an, dass mit Ausführungsformen der Erfindung sowohl absolute Messungen der Leimschichtdicke, die gegebenenfalls mit einem Maß und einer Maßzahl als Ergebnis angeschlossen werden können, als auch relative Anzeigen von Leimschichtdickeverhältnissen ("Leimauftrag A ist dicker als Leimauftrag B" usw.) vorgenommen werden können. Auch ein bloßes Überwachen der Änderung von Ausdehnungsmerkmalen der Leimaufträge (z. B. "der Leimauftrag wird dünner" oder "die gewünschte Kontur geht verloren") kann schon mit etwas weniger ausgereiften Ausführungsformen der vorliegenden Erfindung in vorteilhafter Weise verwirklicht werden.
Vorteilhaft ist auch die Verwendung von Mischformen der vorgenannten Ausführungsformen: So kann an ausgewählten Stellen der Werkstücke eine möglichst genaue Messung der Leimschichtdicke erfolgen, während in anderen Flächenbereichen nur grobe Messungen vorgenommen werden, die eine "binäre Aussage" ("Leim ist da" oder "Leim ist nicht da") erlauben. Diese Aussage erlaubt immer noch eine prinzipielle Bestimmung der Leimauftragskontur. Auf diese Weise könnten teure Sensorhardware und für die Messung notwendige Datenmengen gespart werden.

Der bevorzugte Anwendungsbereich der Erfindung ist bei der Herstellung von Säcken anzusiedeln, wobei das Wort "Säcke" in dieser Druckschrift auch Beutel mit umfasst. Bei der Sack- oder Sackhalbzeugherstellung im Sinne dieser Begriffsbildung kommen unter anderem Schlauchmaschinen, Beutelmaschinen und Sackbodenleger wie Kreuzbodenventilsackbodenleger zum Einsatz. Das Zusammenfügen oder Verschließen der Sackbestandteile erfolgt hier bevorzugt mit Leim und hier wieder vor allem mit Stärkeleim.

Der Begriff "Leim" im Sinne dieser Druckschrift kann jedoch auch Klebstoff oder sonstige Fügemittel mit umfassen.

Bei der Anwendung der Erfindung wird das von den beleimten Gegenständen reflektierte Licht ausgewertet. Hierbei kann man sich zu Nutze machen, dass das Licht, das an den bereits beleimten Stellen reflektiert wird, zweimal den Leimauftrag durchmisst, also innerhalb des Leims zumindest die zweifache Leimschichtdicke zurücklegt (in Abhängigkeit vom Einfallswinkel auch deutlich mehr). Hierbei kommt es zu Streuungs- und Beugungserscheinungen, die insbesondere an den Grenzflächen, also der Oberfläche von Leim und beleimten Material, auftreten. Von besonderem Interesse für die Detektion insbesondere der Schichtdicke des Leimauftrages ist jedoch die Strahlungsabsorption, die innerhalb des Leimes stattfindet.

In der Regel sind Leime Stoffgemische, deren charakteristischen, physikalischen Eigenschaften von den einzelnen Bestandteilen der Stoffgemische bestimmt werden. Aus verschiedenen Gründen ist es vorteilhaft, die Absorptionseigenschaften der Lösungsmittel dieser Leime zu untersuchen und einer erfindungsgemäßen Messung zugrunde zu legen. So ist der Lösemittelanteil bei vielen Teilen größer als der Anteil anderer Inhaltsstoffe, verschiedene Leime enthalten gleiche Lösemittel und die physikalischchemischen Eigenschaften der Lösemittel führen zu auffälligem und gut messbarem Absorptionsverhalten.

So haben alkoholische Lösemittel, Azeton oder Wasser relativ starke Absorptionsbanden in verschiedenen Wellenlängenbereichen. Daher ist es vorteilhaft, wenn eine Messvorrichtung die Lichtintensität (Die Intensität der betreffenden elektromagnetischen Strahlung wird im Folgenden oft kürzer als "Lichtintensität" bezeichnet; auch "elektromagnetische Strahlung" wird nachstehend oft verkürzt als "Licht" bezeichnet. Dies gilt sogar dann, wenn elektromagnetische Strahlung außerhalb des sichtbaren Bereichs - hier insbesondere im nahen Infrarotbereich - gemeint ist) in diesen Wellenlängenbereichen untersuchen kann, beleimte Werkstücke abtastet und die Intensität des von beleimten Teilen reflektierten Lichts mit der Lichtintensität des von den unbeleimten Teilen reflektierten Lichts vergleicht. Der Verlust an Lichtintensität ist zu großen Teilen der Absorption des Leims beziehungsweise im vorstehend beschriebenen Fall des Leimlösemittels geschutdet.

Der Betrag dieser absorbierten Lichtstärke steht in direkter Abhängigkeit zu der Schichtdicke des Leimauftrages. Darüber hinaus ist der der Absorption geschuldete Betrag des Verlustes an Lichtintensität - wie Versuche gezeigt haben - von dem Betrag der anderen Verlustmechanismen wie Streuung oder Brechung trennbar.

Oft verhalten sich die letzteren Lichtintensitätsverluste - zumindest über eine Reihe von Messungen hinweg gemittelt - konstant und können daher bei der Analyse der Lichtintensitätswerte vernachlässigt beziehungsweise abgezogen werden.

Natürlich kann in der beschriebenen Weise neben der Schichtdicke des Leimauftrages auch die Kontur des Leimauftrages bestimmt werden, da sich die Intensität des vom unbeleimten Material reflektierten Lichts (zweite Lichtintensitätswerte) von der Intensität des vom beleimten Material reflektierten Licht (erste Lichtintensitätswerte) unterscheidet. Bedingung für eine flächige Bestimmung der Kontur ist entweder eine flächige Erfassung der Oberflächebeziehungsweise des zu untersuchender Teils der Oberfläche - der Werkstücke oder - insbesondere bei bewegten Werkstücken - die Abtastung eines bandförmigen, quer zur Bewegungsrichtung verlaufenden Bereichs der Werkstücke. Zu beiden Zwecken werden erfindungsgemäß Sensorarrays verwendet werden. In der Regel werden die elektrischen Ausgangssignale dieser Sensorarrays ausgelesen, wobei einem Bildpunkt beziehungsweise Bildbereich auf dem Werkstück ein Ausgangssignal zugeordnet werden kann. Insbesondere bei der Verwendung teurer Sensoren und einer geringen Transportgeschwindigkeit der Werkstücke im Bereich der Sensoreinrichtung kann es vorteilhaft sein, verschiedene kleinere, beispielsweise rund oder quadratisch geformte Teilbereiche der zu untersuchenden Flächenbereiche eines Werkstücks sequentiell zu untersuchen und aus den Messergebnissen der Teilbereiche ein Gesamtmessergebnis zu generieren. In der Fachssprache wird diese Vorgehensweise oft als Rasterung bezeichnet.

Vor dem Hintergrund der obigen Ausführungen zur Intensitätsmessung und zur Beziehung zwischen den Intensitätswerten und der Leimschichtdicke ist es dann vorteilhaft, ein Leimschichtdickenprofil einer Werkstückoberfläche zu erstellen. Die Werkstückflächenabschnitte mit der Leimschichtdicke Null sind unbeleimt.
Ein solches Leimschichtdickenprofil kann auch auf einem Bildschirm dem Bediener sichtbar gemacht werden. Die quantitative Beziehung zwischen Leimschichtdicke und der Differenz der Lichtintensität beleimter und unbeleimter Abschnitte des jeweiligen Werkstückes kann neben der Schichtdicke der Leimschicht auch von einer Reihe anderer Faktoren abhängen (z. B. Lösemittelgehalt des Leims, Absorptionsverhalten der anderen Leimkomponenten, Brechzahl des Leims usw.). Damit kann diese Beziehung von Auftrag zu Auftrag, aber auch während der Abarbeitung eines Auftrags schwanken. In solchen Fällen ist es vorteilhaft, diese Beziehung zu geeigneten Zeitpunkten mit Referenzmessungen, die auch manuell durchgeführt werden können, zu überprüfen. Mit Hilfe dieser Messwerte kann die Sensorvorrichtung und/oder die damit verbundene Auswerte- und Analysevorrichtung kalibriert werden. Auf diese Weise können von dieser Vorrichtung in besonders zuverlässiger Form absolute quantitative Aussagen zur Leimauftragsschichtdicke gemacht werden.
Ein vorteilhafter Anwendungsbereich der vorliegenden Erfindung ist die Detektion von wasserhaltigem Leim - vorzugsweise Stärkeleim - auf Verpackungsmaterial wie Papier, aus dem Beutel oder Säcke hergestellt werden. Versuche haben ergeben, dass sich die Absorptionsbanden des Wassers bei Wellenlängen von ca. 1,4 µm, 1,9 µm und 2,2 µm besonders gut für die erfindungsgemäßen Messungen eignen. Bestehen die Werkstücke aus Zellulose, ist es vorteilhaft, die beiden erstgenannten Wasserbanden zu verwenden, da Zellulose im Bereich der dritten Wasserbande ein eigenes Absorptionsmaximum besitzt. Geeignete Sensorvorrichtungen enthalten vorteilhafterweise Halbleiterbausteine aus InGaAs oder Germanium. Es sind jedoch auch andere Halbleitermaterialien und Sensortypen bekannt, die sich in diesem Zusammenhang verwenden lassen.
Insbesondere, wenn im Bereich der Wasserbanden bei ca. 1,4 µm und 1,9 µm gemessen wird, ist es vorteilhaft, den Einfluss von Licht größerer Wellenlänge (z. B. 2,2 µm) auf die Messung gering zu halten. Dies kann durch die Vorschaltung eines optischen Filters geschehen. Daneben oder darüber hinaus ist auch eine geeignete elektrische Beschaltung von Halbleitersensoren oder auch Photomultiplern (oft "Vorspannung" genannt), die die spektrale Empfindlichkeit dieser Sensortypen in unerwünschten Wellenlängenbereichen einschränkt, von Vorteil.
Weitere Vorteile sind zu schöpfen, wenn das Werkstück während seiner Abtastung von geeigneten Lichtquellen (Quellen elektromagnetischer Strahlung) angestrahlt wird. Zu solchen Lichtquellen gehören Halbleiterlaser, die ebenfalls wieder InGaAs oder Germanium enthalten können. Neben Lasern sind Wendeldrahtlampen, die nach dem Glühlampenprinzip arbeiten, vorteilhaft einsetzbar. Hier sind vor allem Wolframhalogenlampen, aber auch Wolframdrahtlampen mit anderer Schutzatmosphäre von Vorteil.
Energie wird vor allem dann gespart, wenn die Strahlungsquelle in den Wellenlängenbereichen, in denen die Sensoreinrichtung messen soll, nennenswerte Lichtintensität bereitstellt oder gar lokale oder absolute Intensitätsmaxima aufweist.
Es hat sich als vorteilhaft erwiesen, wenn zwischen der Strahlungsvorrichtung, die das genannte Licht erzeugt, und der Sensorvorrichtung ein Winkel von 20° bis 40° liegt.
Die von erfindungsgemäßen Vorrichtungen aufgenommenen Lichtintensitätswerte können zur Regelung der Leimschichtdicke oder der Leimkontur genutzt werden. Insbesondere bei der Verwendung der erfindungsgemäßen Vorrichtung im Zusammenhang mit der Herstellung von Säcken ist diese Maßnahme vorteilhaft. Dies gilt insbesondere, wenn so genannte Düsenbeleimungsvorrichtungen, wie sie in den Druckschriften DE 102 42 732 A1, DE 103 30 751 A1, DE 103 30 750 A1, 103 09 893 A1 und DE 103 27 646 A1 vorgestellt werden, Verwendung finden. Bei solchen Vorrichtungen können infolge von Viskositätsschwankungen des Leims oder von Verstopfungen einzelner Leimextrusionsdüsen oder deren Zuleitungen usw. Schwankungen sowohl der Leimschichtdicke als auch Unregelmäßigkeiten in der Leimkontur auftreten.
In diesem Fall kann den erwähnten Störungen beispielsweise durch eine Regelung des Leimdrucks oder anderer Parameter der Beleimungsvorrichtung begegnet werden. Dies kann durch eine Steuervorrichtung geschehen, der die Sensorvorrichtung und/oder eine zwischengeschaltete Auswerte- und Analyseeinheit ihre Messwerte mitteilt. Die Steuervorrichtung generiert dann Steuersignale, welche die betreffenden Komponenten der Beleimungsvorrichtung ansteuern.
Auch wenn ein Beleimungsverfahren konventioneller Art (siehe zum Beispiel Beschreibung des Standes der Technik in DE 103 09 893 A1 oder Vorrichtung nach DE 102 55 485 A1) verwendet wird, bei dem Walzen Leim aus einem Leimreservoir auf die Werkstücke übertragen, kann mit Steuersignalen Einfluss auf den Leimauftrag genommen werden. So kann beispielsweise der Spalt zwischen Auftrags- und Dosierwalze durch Steuersignale an die entsprechenden Aktoren oder durch manuelle Einstellungen beeinflusst werden.
Eine weitere Möglichkeit, bei diesen konventionellen Leimwerken die Leimauftragsgeometrie zu beeinflussen, besteht in der Regelung der Drehgeschwindigkeit der Auftragswalze, wie es in der DE 102 55 486 beschrieben ist. Diese Regelung kann aufgrund der erfindungsgemäßen Messungen ebenfalls automatisch oder unter Einflussnahme eines Bedieners vorgenommen werden.

Insbesondere bei Stärkeleim besteht bei allen vorgenannten Beleimungsvorrichtungen eine weitere Einflussmöglichkeit in der Ansteuerung eines Rührwerks (Zuschaltung oder sogar Drehzahlsteuerung beziehungsweise -regelung), da durch ein solches Rührwerk die Rheologie beziehungsweise die Viskosität des Leims maßgeblich beeinflusst werden kann.
Diejenigen Abschnitte der vorgenannten Druckschriften, die sich mit Leimleitung und Übertragung befassen und/oder die im vorliegenden Zusammenhang als relevant für die Leimauftragsmenge auf die Werkstücke angesehen werden können, werden als Bestandteile dieser Anmeldung angesehen.

Bei der Berechnung der Leimschichtdicke aufgrund des Vergleiches von ersten Lichtintensitätswerten von beleimten Bereichen des Werkstücks und zweiten Lichtintensitätswerten von unbeleimten Bereichen desselben kann es vorteilhaft sein, auch die zweiten Lichtintensitätswerte bei jedem Werkstück oder doch zumindest in kurzen Intervallen aufzunehmen. Dies ist insbesondere der Fall, wenn auch die unbeleimten Teile des Werkstückes mit schwankenden Mengen des Lösemittels benetzt oder durchtränkt sind. So können die aus Zellulose bestehenden Werkstücke beispielsweise von Wasser durchtränkt sein. So werden Papierschlauchstücke, die als Halbzeuge für die Sackherstellung dienen, ebenfalls oft mit Hilfe von wasserbasiertem Stärkeleim hergestellt. Dieser Umstand zieht oft eine von Schlauchstück zu Schlauchstück schwankende und in verschiedenen Oberflächenbereichen eines Schlauchstücks unterschiedliche Durchfeuchtung des Schlauchstücks nach sich. Hier kann es vorteilhaft sein, zweite Lichtintensitätswerte aus verschiedenen Bereichen der Schlauchstückoberfläche jeweils mit ersten Lichtintensitätswerten aus benachbarten Bereichen der Oberfläche des Werkstücks in Beziehung zu setzen.

Eine von Schlauchstück zu Schlauchstück stark schwankende Durchfeuchtung des Materials kann auch auftreten, wenn die Schlauchstücke nach ihrer Herstellung in Stapeln gelagert werden. Die mittleren Schlauchstücke des Stapels weisen dann eine größere Materialdurchfeuchtung auf als die äußeren, was zu Messfehlern bei der Bestimmung der Leimauftragsgeometrie führen kann. Wie erwähnt ist hier eine regelmäßige Messung der durch die wechselnde Durchfeuchtung hervorgerufenen Absorptionsschwankungen des Zellulosematerials, beispielsweise von Schlauchstück zu Schlauchstück, vorteilhaft.

Die erfindungsgemäße Möglichkeit der Bildung des Hintergrundes beziehungsweise zur Überprüfung des Reflektionsverhaltens der Werkstückoberflächen ist die zusätzliche Einstrahlung von Licht etwas anderer Wellenlänge. Wenn diese Wellenlängen außerhalb der Absorptionsmaxima der betreffenden Leime oder deren Lösemittel liegen, findet keine nennenswerte Absorption statt. Die Intensität der reflektierten Strahlung hängt damit nur noch maßgeblich von der eingestrahlten Lichtintensität und dem Reflexionsvermögen der Werkstückoberfläche ab. Damit können auch die so gewonnenen Lichtintensitätswerte als "zweite Lichtintensitätswerte", ähnlich wie die Lichtintensitätswerte der unbeleimten Werkstückbereiche, benutzt werden.

Es ist allerdings zweckmäßig, wenn die Wellenlänge dieses Lichts nicht zu weit von der Wellenlänge der ersten Lichtintensitätswerte beabstandet ist, da sich das Reflektionsverhalten vieler Werkstückmaterialien eben auch mit der Wellenlänge des eingestrahlten Lichts ändert.

Weitere Ausführungsbeispiele der Erfindung gehen aus der gegenständlichen Beschreibung und den Ansprüchen hervor.

Die einzelnen Figuren zeigen:
- Fig. 1: Skizze einer erfindungsgemäßen Vorrichtung
- Fig. 2: Skizze einer Leimauftragsvorrichtung
- Fig. 3: Eine Draufsicht auf ein erstes beleimtes Werkstück
- Fig. 4: Eine Draufsicht auf ein zweites beleimtes Werkstück
- Fig. 5: Eine Skizze eines Leimauftragssystems mit einer erfindungsgemäßen Vorrichtung
- Fig. 6a: Einen Schnitt entlang der Linie A-A der Figur 6b
- Fig. 6b: Eine Draufsicht auf ein Werkstück 6
- Fig. 7a: Einen Schnitt entlang der Linie B-B der Figur 6b
- Fig. 7b: Eine Draufsicht auf ein Werkstück 6

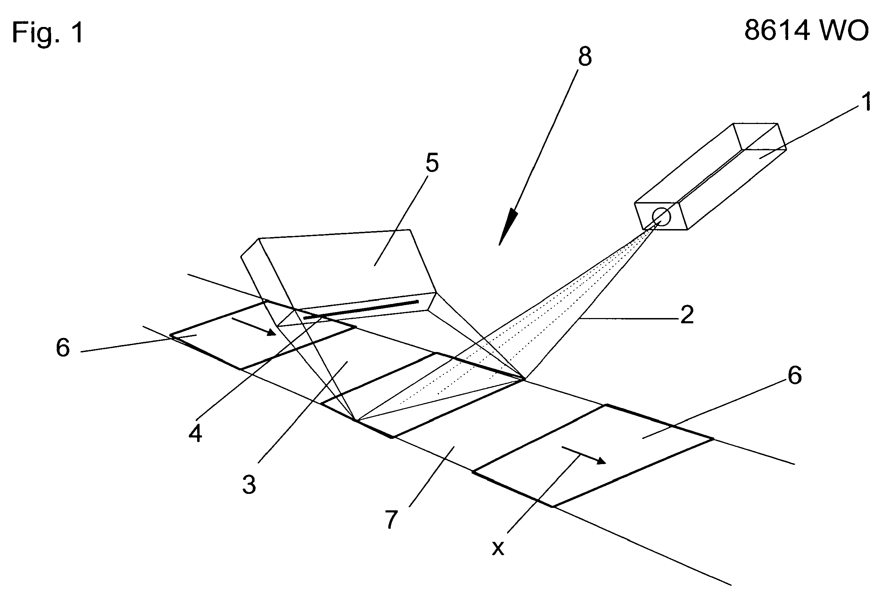

Fig. 1 zeigt eine Skizze eines Ausführungsbeispiels einer erfindungsgemäßen Vorrichtung, bei dem eine Strahlungsvorrichtung 1 Strahlung 2 auf ein Werkstück 6, vorzugsweise einen Sack oder ein Sackhalbzeug emittiert. Von der Oberfläche desselben wird die reflektierte elektromagnetische Strahlung 3 (in der vorliegenden Druckschrift oft allgemein als Licht bezeichnet) in den Strahlungseingang 4 der Sensoreinrichtung 5 reflektiert.

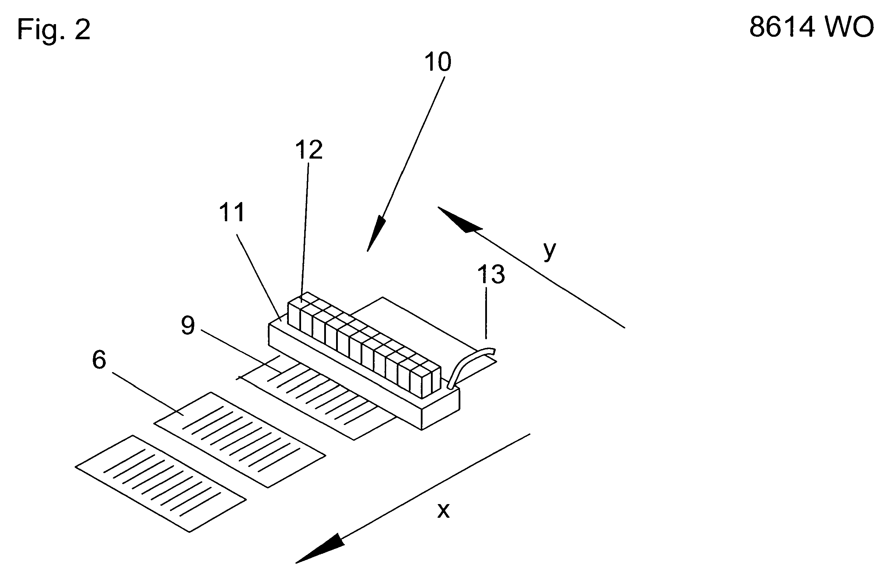

Im vorliegenden Fall werden die Werkstücke 6 in der Förderrichtung x der Werkstücke entlang dem Transportweg 7 transportiert. In Figur 1 sind die Leimaufträge 9, deren Geometrie bestimmt werden soll, nicht dargestellt. Ihre Lage wird bei Betrachtung der Figuren 2 bis 5 klar.

In Figur 2 ist dargestellt, wie eine moderne Leimauftragsvorrichtung, wie sie unter anderem in der DE 103 09 893 A1 dargestellt ist, Leim auf die Werkstücke 6 aufträgt. Ein bevorzugter Einsatzort für alle Arten von Leimauftragsvorrichtungen ist die Sackherstellung, bei der gefaltete Sackböden, Bodendeckblätter und Ventilzettel beleimt werden können.

Auf einem Auftragskopf 11 sind Leimventile 12 angebracht, die von Leim, der dem Auftragskopf über die Zuleitung 13 zugeführt wird, auf seinem Weg zu nicht dargestellten Leimauftragsöffnungen durchflossen wird. Von den Leimauftragsöffnungen gelangt der Leim auf die Werkstücke 6 und bildet Leimaufträge 9, die verschiedene Leimkonturen bilden können.

Die Messung der Leimkonturen und/oder der Schichtdicke der Leimaufträge 9 ist ein Gegenstand dieser Druckschrift. Der Pfeil y bezeichnet die Raumrichtung quer zur Förderrichtung der Werkstücke 6.

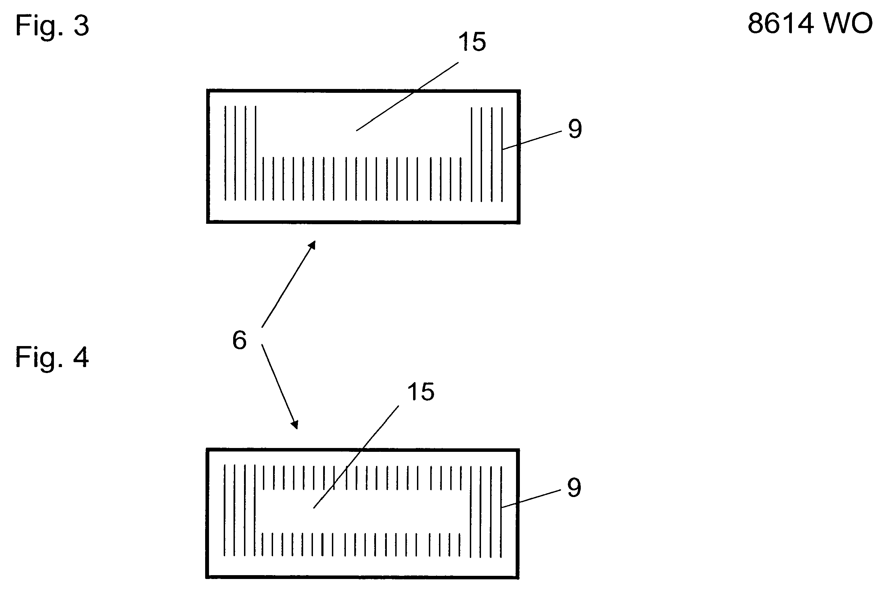

Die Figuren 3 und 4 zeigen Werkstücke 6 mit unterschiedlichen Leimkonturen, die von einer Leimauftragsvorrichtung, wie sie in Figur 2 dargestellt ist, durch die Extrusion unterschiedlich langer und positionierter Leimaufträge 6 erzeugt werden kann. Bei herkömmlichen Leimauftragsvorrichtungen wird die Leimauftragskontur durch den Wechsel eines Formatteiles verändert. Die Werkstücke weisen großflächige, unbeleimte Bereiche 15 auf. Auch zwischen den Leimauftragen befinden sich hier jedoch unbeleimte Bereiche.

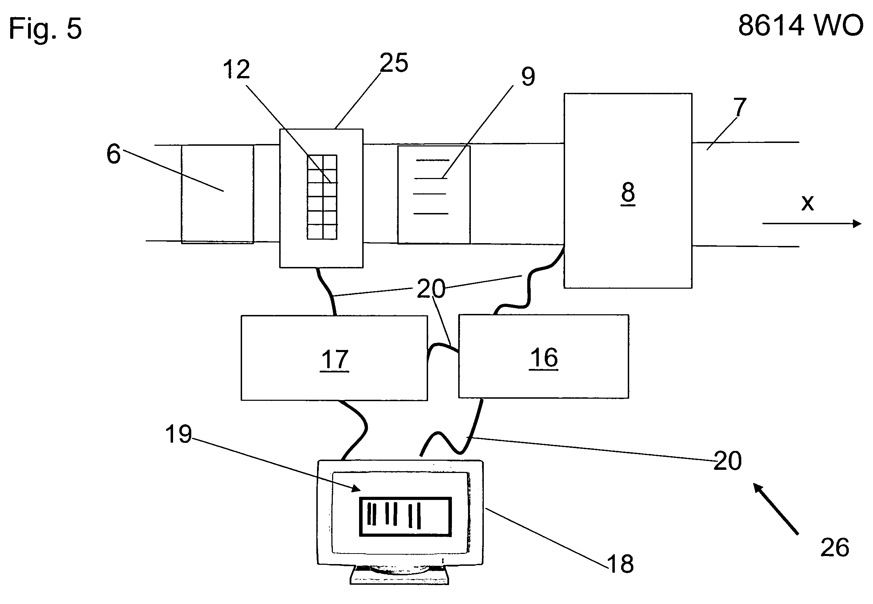

In Figur 5 wird noch einmal in Form einer Prinzipskizze die Einbindung einer erfindungsgemäßen Vorrichtung 8 in einer komplexen und fortgeschrittenen Leimauftragsanlage 26, die beispielsweise Teil eines Kreuzbodenventilsackbodenlegers sein kann, dargestellt.

Zunächst werden die Werkstücke 6 in beliebiger Art und Weise in ihrer Transportrichtung x entlang des Transportweges 7 transportiert und von einer Beleimungsvorrichtung 25, die neben den in Figur 2 dargestellten Komponenten auch alle weiteren für den Leimauftrag notwendigen Komponenten, wie Leimreservoirs, Leimleitungen, Druckbereitstellungseinrichtungen usw. enthält, beleimt. Hierbei entstehen die Leimaufträge 9, die von der erfindungsgemäßen Vorrichtung, die zumindest eine geeignete Sensorvorrichtung 5 umfasst, abgetastet wird. Die Vorrichtung 8 leitet die Messwerte an die Auswerte- und Analysevorrichtung 16. Hier können "erste Messwerte" der beleimten Bereiche mit "zweiten Messwerten" unbeleimter Bereiche in Beziehung gesetzt werden. Ist die Auswerte- und Analysevorrichtung 16 in geeigneter Weise kalibriert, was über regelmäßige Referenzmessungen, aber auch über Kalibriertabellen und/oder Rechenalgorithmen geschehen kann, kann sie Bereichen des Werkstückes Leimauftragsschichtdicken zuordnen. So ist es möglich, ein Bild der Leimkontur 19 zu erstellen und auf einer Anzeigevorrichtung 18 anzuzeigen.

Doch auch ohne diese Möglichkeiten können mit erfindungsgemäßen Vorrichtungen Schwankungen des Leimauftragsbildes erkannt und direkt oder über eine Analysevorrichtung 16 einer Steuervorrichtung 17 gemeldet werden. Diese 17 kann Steuersignale an die Leimauftragsvorrichtung 25 weiterleiten, aufgrund derer der Leimauftrag beeinflusst, also geregelt wird. In der Regel werden die Auswerte- und Analysevorrichtung 16 und die Steuervorrichtung 17 Bestandteile eines Industriecomputers beziehungsweise einer Maschinensteuerungsvorrichtung sein.

Oft ist es vorteilhaft, wenn aufgrund der Messungen auch manuell Steuerbefehle durch den Maschinenbediener eingegeben werden.

Mit dem Bezugszeichen 20 sind Steuerleitungen beziehungsweise Datenflüsse bezeichnet.

In der Praxis ist es oft vorteilhaft, die Leimauftragsvorrichtung 10 und die Sensoreinrichtung 5 nah zueinander zu beabstanden, damit der aufgetragene Leim nicht antrocknet oder das Werkstückmaterial durchfeuchtet, bevor er die Sensoreinrichtung 5 erreicht.

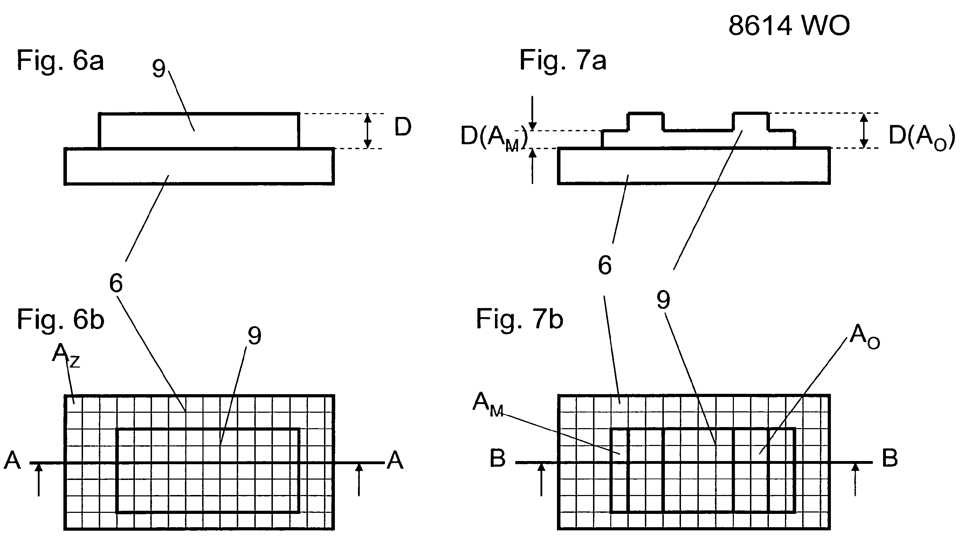

Die Figuren 6a und 6b zeigen ein weiteres Werkstück 6 mit einem weiteren Leimauftrag 9. Erfindungsgemäß erfolgt bei der Untersuchung des Leimauftrages eine Rasterung der Fläche des Werkstückes durch eine Untersuchung der Flächenabschnitte An, von denen die Flächenabschnitte A_{Z}, A_{M} und A_{O} in den Figuren beispielhaft gezeigt sind. Zunächst ist die Rasterung bei der Erkennung der Leimkontur hilfreich. Befindet sich Leim in einem Flächenabschnitt, so ist dieser innerhalb der Leimkontur. Der Leimauftrag in den Figuren 6a und 6b hat eine einheitliche Schichtdicke D. In den Figuren 7a und 7b ist dargestellt, dass die Schichtdicke des Leimauftrages auch variieren kann. So ist die Schichtdicke im Flächenbereich A_{M} kleiner als im Flächenbereich A_{O} [D(A_{M}) < D(A_{O}) siehe Figur 7a]. Erfindungsgemäße Vorrichtungen ordnen die Schichtdicke pro Flächenbereich D(An) zu.

| **Bezugszeichenliste** | |
|---|---|
| 1 | Strahlungsvorrichtung |
| 2 | elektromagnetische Strahlung |
| 3 | reflektierte Strahlung |
| 4 | Strahlungseingang |
| 5 | Sensoreinrichtung |
| 6 | Werkstücke |
| 7 | Transportweg der Werkstücke |
| 8 | erfindungsgemäße Vorrichtung |
| 9 | Leimaufträge |
| 10 | Leimauftragsvorrichtung |
| 11 | Auftragskopf |
| 12 | Leimventile |
| 13 | Leimleitung |
| 14 | |
| 15 | großflächige unbeleimte Bereiche |
| 16 | Auswerte- und Analysevorrichtung |
| 17 | Steuervorrichtung |
| 18 | Anzeigevorrichtung |
| 19 | Bild der Leimkontur |
| 20 | Steuerleitungen, Datenwege |
| 21 | |
| 22 | |
| 23 | |
| 24 | |
| 25 | komplette Beleimungsvorrichtung |
| 26 | Leimauftragsanlage |
| x | Raumrichtung in Transportrichtung der Werkstücke |
| y | Raumrichtung quer zur Transportrichtung der Werkstücke |
| An | Flächenabschnitte |
| D(_{An}) | Schichtdicke des Flächenabschnittes An |
| D | Schichtdicke des Leimauftrages |

## Patentansprüche

1. Vorrichtung (8) zur Messung und/oder Überwachung von räumlichen Ausdehnungsmerkmalen von Leimaufträgen (9) auf Werkstücken (6), vorzugsweise auf Säcken oder Sackhalbzeugen aus Zellulosematerial,
- **wobei** eine Strahlungsvorrichtung (1) vorgesehen ist, mit welcher die Werkstücke (6) mit elektromagnetischer Strahlung in einem ersten Wellenlängenbereich und in einem anderen Wellenlängenbereich anstrahlbar sind,
- **wobei** die Vorrichtung eine Sensoreinrichtung (5) umfasst, mit welcher Eigenschaften der von den Werkstücken (6) ausgehenden elektromagnetischen Strahlung (3) aufzeichenbar sind,**wobei** mit der Sensorvorrichtung (5) erste Lichtintensitätswerte der von den Werkstücken (6) reflektierten elektromagnetischen Strahlung (3) im ersten Wellenlängenbereich und zweite Lichtintensitätswerte der von den Werkstücken reflektierten elektromagnetischen Strahlung der anderen Wellenlänge aufzeichenbar sind,
- **wobei** mit der Sensorvorrichtung (5) die ersten Lichtintensitätswerte von beleimten (9) und die zweiten Lichtintensitätswerte von unbeleimten (15) Bereichen der Werkstücke (6) aufnehmbar sind,
- **und** eine Auswerte- und Analysevorrichtung (16) vorhanden ist, mit welcher die ersten und zweiten Lichtintensitätswerte zueinander in Relation gesetzt werden und bei der Ermittlung oder Überwachung der Leimschichtdicke berücksichtigbar sind,
**dadurch gekennzeichnet,**
- **dass** wenigstens ein Sensorarray zur Abtastung des zu untersuchenden Teils der Oberfläche der Werkstücke vorgesehen ist,
- **dass** die Vorrichtung (8) so gestaltet ist, dass eine Untersuchung von Flächenabschnitten (An) mittels einer Rasterung der Fläche des Werkstücks durchführbar ist, wobei jedem Flächenabschnitt eine Schichtdicke (D(An)) zuordenbar ist,
- dass eine Steuervorrichtung (17) vorhanden ist,
- **und dass** die Messwerte der Steuervorrichtung (17) übermittelbar sind, mit welcher die Messwerte bei der Generierung von Steuer- oder Regelsignalen an die Leimauftragsvorrichtung (25) berücksichtigbar sind.

2. Vorrichtung nach Anspruch 1,
**dadurch gekennzeichnet, dass**
mit der Sensorvorrichtung (5) die Intensitätswerte ausgewählter Wellenlängenbereiche elektromagnetischer Strahlung (2,3) aufzeichenbar sind.

3. Vorrichtung nach dem vorstehenden Anspruch,
**dadurch gekennzeichnet, dass**
mit der Sensorvorrichtung (5) die Lichtintensitätswerte in dem Wellenlängenbereich elektromagnetischer Strahlung (2,3) zwischen 1,2 und 2,4 µm aufzeichenbar sind.

4. Vorrichtung nach dem vorstehenden Anspruch,
**dadurch gekennzeichnet, dass**
mit der Sensorvorrichtung (5) die Lichtintensitätswerte in dem Wellenlängenbereich elektromagnetischer Strahlung (2,3) zwischen 1,2 und 2,1 µm aufzeichenbar sind.

5. Vorrichtung nach dem vorstehenden Anspruch,
**dadurch gekennzeichnet, dass**
mit der Sensorvorrichtung (5) die Lichtintensitätswerte in dem Wellenlängenbereich elektromagnetischer Strahlung (2,3) zwischen 1,35 und 1,95 µm aufzeichenbar sind.

6. Vorrichtung nach dem vorstehenden Anspruch,
**dadurch gekennzeichnet, dass**
mit der Sensorvorrichtung (5) die Lichtintensitätswerte in dem Wellenlängenbereich elektromagnetischer Strahlung (2,3) zwischen 1,35 und 1,5 µm aufzeichenbar sind.

7. Vorrichtung nach einem der vorstehenden Ansprüche,
**dadurch gekennzeichnet, dass**
die Sensorvorrichtung (5) zumindest einen Halbleiterbaustein aus InGaAs oder Germanium enthält.

8. Vorrichtung nach einem der vorstehenden Ansprüche,
**dadurch gekennzeichnet, dass**
mit der Strahlungsvorrichtung (1) die Werkstücke (6) mit elektromagnetischer Strahlung (2) anstrahlbar sind, welche (2) in zumindest einem der vorstehend aufgeführten Wellenlängenbereiche einen hervorgehobenen Lichtintensitätsverlauf aufweisen.

9. Vorrichtung nach einem der vorstehenden Ansprüche,
**dadurch gekennzeichnet, dass**
mit der Strahlungsvorrichtung (1) die Werkstücke (6) mit elektromagnetischer Strahlung (2) anstrahlbar sind, welche (2) in zumindest einem der vorstehend aufgeführten bevorzugten Wellenlängenbereiche der Sensoreinrichtung (5) relative oder absolute Lichtintensitätsmaxima aufweist.

10. Vorrichtung nach einem der vorstehenden Ansprüche,
**dadurch gekennzeichnet, dass**
die Strahlungsvorrichtung (1) zumindest eine Lampe mit einer Glühwendel aus Wolfram - vorzugsweise eine Wolfram-Halogenlampe - umfasst.

11. Vorrichtung nach einem der vorstehenden Ansprüche,
**dadurch gekennzeichnet, dass**
die Strahlungsvorrichtung (1) zumindest einen Halbleiterbaustein - vorzugsweise aus InGaAs oder Germanium - umfasst.

12. Vorrichtung nach einem der vorstehenden Ansprüche,
**dadurch gekennzeichnet, dass**
der Winkel zwischen der Strahlungsvorrichtung (1) und der Sensoreinrichtung (5) bezüglich der im Abtastbereich befindlichen Werkstücke (6) zwischen 20° und 40°- vorzugsweise bei 30° - liegt.

13. Vorrichtung nach einem der vorstehenden Ansprüche,
**dadurch gekennzeichnet, dass**
mit der Sensorvorrichtung (5) wesentliche Teile der Ausdehnung der Werkstücke (6) in zumindest einer Raumrichtung (x,y) abtastbar sind.

14. Vorrichtung nach einem der vorstehenden Ansprüche,
**dadurch gekennzeichnet, dass**
mit der Sensorvorrichtung (5) wesentliche Teile der Breite von Sackböden und/oder Bodendeckblättern und/oder Ventilzetteln abtastbar sind.

15. Sack- oder Sackhalbzeugherstellvorrichtung, welche zumindest eine Vorrichtung nach einem der vorstehenden Ansprüche enthält.

16. Verfahren zur Messung und/oder Überwachung räumlicher Ausdehnungsmerkmale von Leimaufträgen (9) auf Werkstücken (6),
- **welche** (9) vorzugsweise bei der Herstellung von Säcken oder Sackhalbzeugen auf Werkstücke (6) aus Zellulosematerial aufgetragen werden,
- **wobei** eine Strahlungsvorrichtung (1) vorgesehen ist, mit welcher die Werkstücke (6) mit elektromagnetischer Strahlung eines ersten Wellenlängenbereichs und einer anderen Wellenlänge angestrahlt werden,
- **wobei** mit einer Sensoreinrichtung (5) Eigenschaften der von den Werkstücken ausgehenden elektromagnetischen Strahlung (3) aufgezeichnet werden,
- **wobei** mit der Sensorvorrichtung (5) erste Lichtintensitätswerte der von den Werkstücken (6) reflektierten elektromagnetischen Strahlung (3) im ersten Wellenlängenbereich und zweite Lichtintensitätswerte der von den Werkstücken reflektierten elektromagnetischen Strahlung bei der anderen Wellenlänge aufgezeichnet werden,
- **wobei** mit der Sensorvorrichtung (5) die ersten Lichtintensitätswerte von beleimten (9) und die zweiten Lichtintensitätswerte von unbeleimten (15) Bereichen der Werkstücke (6) aufgenommen werden,
- **wobei** die die ersten und zweiten Lichtintensitätswerte zueinander in Relation gesetzt werden und bei der Ermittlung oder Überwachung der Leimschichtdicke berücksichtigt werden,
**dadurch gekennzeichnet,**
- **dass** mit wenigstens einem Sensorarray der zu untersuchenden Teils der Oberfläche der Werkstücke abgetastet wird,
- **dass** eine Untersuchung von Flächenabschnitten (An) mittels einer Rasterung der Fläche des Werkstücks durchgeführt wird, wobei jedem Flächenabschnitt eine Schichtdicke (D(An)) zugeordnet wird,
- **und dass** die Messwerte einer Steuervorrichtung (17) gemeldet werden, die die Messwerte bei der Generierung von Steuer- oder Regelsignalen an die Leimauftragsvorrichtung (25) berücksichtigt.

## Claims

1. Apparatus (8) for measuring and/or monitoring three-dimensional expansion features of applied glue (9) on workpieces (6), preferably on sacks or sack semifinished products made out of cellulose material,
- **wherein** provision is made of a radiation apparatus (1), by means of which it is possible to irradiate the workpieces (6) with electromagnetic radiation in a first wavelength range and in a different wavelength range,
- **wherein** the apparatus comprises a sensor device (5), by means of which it is possible to record properties of the electromagnetic radiation (3) emanating from the workpieces (6), **wherein** it is possible, by way of the sensor apparatus (5), to record first light intensity values of the electromagnetic radiation (3) reflected by the workpieces (6) in the first wavelength range and second light intensity values of the electromagnetic radiation reflected by the workpieces in the other wavelength,
- **wherein** it is possible, by way of the sensor apparatus (5), to record the first light intensity values from regions of the workpieces (6) with glue (9) and the second light intensity values from regions of the workpieces (6) without glue (15),
- **and** an evaluation and analysis apparatus (16) is present, by means of which the first light intensity values and second light intensity values are related to one another and able to be taken into account when establishing or monitoring the thickness of the glue layer,
**characterized**
- **in that** provision is made of at least one sensor array for scanning the part of the surface of the workpieces to be examined,
- **in that** the apparatus (8) is configured in such a way that it is possible to carry out an examination of surface portions (An) by way of converting the surface of the workpiece into a grid, wherein a layer thickness (D(An)) is assignable to each surface portion,
- **in that** a control apparatus (17) is present,
- **and in that** the measurement values are transmittable to the control apparatus (17), by means of which the measurement values are able to be taken into account when generating open-loop or closed-loop control signals for the glue application apparatus (25).

2. Apparatus according to Claim 1,
**characterized in that**
it is possible to record the intensity values of selected wavelength ranges of electromagnetic radiation (2, 3) using the sensor apparatus (5).

3. Apparatus according to the preceding claim,
**characterized in that**
it is possible to record the light intensity values in the wavelength range of electromagnetic radiation (2, 3) between 1.2 and 2.4 µm using the sensor apparatus (5).

4. Apparatus according to the preceding claim,
**characterized in that**
it is possible to record the light intensity values in the wavelength range of electromagnetic radiation (2, 3) between 1.2 and 2.1 µm using the sensor apparatus (5).

5. Apparatus according to the preceding claim,
**characterized in that**
it is possible to record the light intensity values in the wavelength range of electromagnetic radiation (2, 3) between 1.35 and 1.95 µm using the sensor apparatus (5).

6. Apparatus according to the preceding claim,
**characterized in that**
it is possible to record the light intensity values in the wavelength range of electromagnetic radiation (2, 3) between 1.35 and 1.5 µm using the sensor apparatus (5).

7. Apparatus according to one of the preceding claims,
**characterized in that**
the sensor apparatus (5) contains at least one semiconductor component made of InGaAs or germanium.

8. Apparatus according to one of the preceding claims,
**characterized in that**
it is possible to irradiate the workpieces (6) with electromagnetic radiation (2) using the radiation apparatus (1), said radiation (2) having an accentuated light intensity profile in at least one of the wavelength ranges listed above.

9. Apparatus according to one of the preceding claims,
**characterized in that**
it is possible to irradiate the workpieces (6) with electromagnetic radiation (2) using the radiation apparatus (1), said radiation (2) having relative or absolute light intensity maxima in at least one of the preferred wavelength ranges of the sensor device (5) listed above.

10. Apparatus according to one of the preceding claims,
**characterized in that**
the radiation apparatus (1) comprises at least one lamp with a tungsten filament - preferably a tungsten halogen lamp.

11. Apparatus according to one of the preceding claims,
**characterized in that**
the radiation apparatus (1) comprises at least one semiconductor component - preferably made of InGaAs or germanium.

12. Apparatus according to one of the preceding claims,
**characterized in that**
the angle between the radiation apparatus (1) and the sensor device (5) in respect of the workpieces (6) situated in the scanning region lies between 20° and 40° - preferably at 30°.

13. Apparatus according to one of the preceding claims,
**characterized in that**
it is possible to scan substantial parts of the extent of the workpieces (6), at least in one spatial direction (x, y), by means of the sensor apparatus (5).

14. Apparatus according to one of the preceding claims,
**characterized in that**
it is possible to scan substantial parts of the width of sack bottoms and/or bottom covering sheets and/or valve panels by means of the sensor apparatus (5).

15. Sack or sack semifinished product production apparatus, containing at least one apparatus according to one of the preceding claims.

16. Method for measuring and/or monitoring three-dimensional expansion features of applied glue (9) on workpieces (6),
- **which** instances of applied glue (9) are preferably applied when producing sacks or sack semifinished products on workpieces (6) made of cellulose material,
- **wherein** provision is made of a radiation apparatus (1), by means of which the workpieces (6) are irradiated with electromagnetic radiation in a first wavelength range and at a different wavelength,
- **wherein** properties of the electromagnetic radiation (3) emanating from the workpieces are recorded by a sensor device (5),
- **wherein** first light intensity values of the electromagnetic radiation (3) reflected by the workpieces (6) in the first wavelength range and second light intensity values of the electromagnetic radiation reflected by the workpieces in the other wavelength are recorded by the sensor apparatus (5),
- **wherein** the first light intensity values from regions of the workpieces (6) with glue (9) and the second light intensity values from regions of the workpieces (6) without glue (15) are recorded by the sensor apparatus (5),
- **wherein** the first light intensity values and second light intensity values are related to one another and taken into account when establishing or monitoring the thickness of the glue layer,
**characterized**
- **in that** the part of the surface of the workpieces to be examined is scanned by at least one sensor array,
- **in that** an examination of surface portions (An) is carried out by way of converting the surface of the workpiece into a grid, wherein a layer thickness (D(An)) is assigned to each surface portion,
- **and in that** the measurement values are reported to a control apparatus (17), which takes the measurement values into account when generating open-loop or closed-loop control signals for the glue application apparatus (25).

## Revendications

1. Dispositif (8) de mesure et/ou de surveillance de caractéristiques d'expansion dans l'espace d'applications de colle (9) sur des pièces (6), de préférence sur des sachets ou des sachets semi-finis en matériau cellulosique,
- un dispositif de rayonnement (1) étant présent, avec lequel les pièces (6) peuvent être irradiées avec un rayonnement électromagnétique dans une première plage de longueurs d'onde et dans une autre plage de longueurs d'onde,
- le dispositif comprenant un appareil de détection (5) à l'aide duquel peuvent être enregistrées des propriétés du rayonnement électromagnétique (3) émis par les pièces (6), des premières valeurs d'intensité lumineuse du rayonnement électromagnétique (3) émis par les pièces (6) dans la première plage de longueur d'onde et des deuxièmes valeurs d'intensité lumineuse du rayonnement électromagnétique émis par les pièces dans l'autre plage de longueur d'onde pouvant être enregistrées par l'appareil de détection (5),
- l'appareil de détection (5) permettant de relever les premières valeurs d'intensité lumineuse des zones encollées (9) et les deuxièmes valeurs d'intensité lumineuse des zones non encollées (15) des pièces (6),
- et un dispositif d'interprétation et d'analyse (16) étant présent, avec lequel les premières et deuxièmes valeurs d'intensité lumineuse sont mises en relation les unes avec les autres et peuvent être prises en compte lors de la détermination ou de la surveillance de l'épaisseur de couche de colle,
**caractérisé en ce**
- **qu'**il existe au moins un réseau de capteurs destiné à palper la partie à analyser de la surface des pièces,
- **que** le dispositif (8) est configuré de telle sorte qu'une analyse de portions de la surface (An) peut être réalisée au moyen d'un tramage de la surface de la pièce, une épaisseur de couche (D(An)) pouvant être associée à chaque portion de la surface,
- **qu'**il existe un dispositif de commande (17),
- et **que** les valeurs mesurées peuvent être communiquées au dispositif de commande (17), avec lequel les valeurs mesurées peuvent être prises en compte lors de la génération de signaux de commande ou de régulation au dispositif d'application de colle (25).

2. Dispositif selon la revendication 1, **caractérisé en ce que** les valeurs d'intensité de plages de longueurs d'onde sélectionnées du rayonnement électromagnétique (2, 3) peuvent être enregistrées avec l'appareil de détection (5).

3. Dispositif selon la revendication précédente, **caractérisé en ce que** les valeurs d'intensité lumineuse dans la plage de longueurs d'onde du rayonnement électromagnétique (2, 3) entre 1,2 et 2,4 µm peuvent être enregistrées avec l'appareil de détection (5).

4. Dispositif selon la revendication précédente, **caractérisé en ce que** les valeurs d'intensité lumineuse dans la plage de longueurs d'onde du rayonnement électromagnétique (2, 3) entre 1,2 et 2,1 µm peuvent être enregistrées avec l'appareil de détection (5).

5. Dispositif selon la revendication précédente, **caractérisé en ce que** les valeurs d'intensité lumineuse dans la plage de longueurs d'onde du rayonnement électromagnétique (2, 3) entre 1,35 et 1,95 µm peuvent être enregistrées avec l'appareil de détection (5).

6. Dispositif selon la revendication précédente, **caractérisé en ce que** les valeurs d'intensité lumineuse dans la plage de longueurs d'onde du rayonnement électromagnétique (2, 3) entre 1,35 et 1,5 µm peuvent être enregistrées avec l'appareil de détection (5).

7. Dispositif selon l'une des revendications précédentes, **caractérisé en ce que** l'appareil de détection (5) contient au moins un composant semiconducteur en InGaAs ou en germanium.

8. Dispositif selon l'une des revendications précédentes, **caractérisé en ce que** le dispositif de rayonnement (1) permet d'irradier les pièces (6) avec un rayonnement électromagnétique (2) qui (2) possèdent une courbe d'intensité lumineuse accentuée dans au moins l'une des plages de longueurs d'onde mentionnées précédemment.

9. Dispositif selon l'une des revendications précédentes, **caractérisé en ce que** le dispositif de rayonnement (1) permet d'irradier les pièces (6) avec un rayonnement électromagnétique (2) qui (2) possède un maximum d'intensité lumineuse relatif ou absolu dans au moins l'une des plages de longueurs d'onde préférées mentionnées précédemment de l'appareil de détection (5).

10. Dispositif selon l'une des revendications précédentes, **caractérisé en ce que** le dispositif de rayonnement (1) comprend au moins une lampe munie d'un filament spiralé en tungstène, de préférence une lampe halogène au tungstène.

11. Dispositif selon l'une des revendications précédentes, **caractérisé en ce que** le dispositif de rayonnement (1) comprend au moins un composant semiconducteur, de préférence en InGaAs ou en germanium.

12. Dispositif selon l'une des revendications précédentes, **caractérisé en ce que** l'angle entre le dispositif de rayonnement (1) et l'appareil de détection (5) par rapport aux pièces (6) qui se trouvent dans la zone de palpage est compris entre 20° et 40°, de préférence est d'environ 30°.

13. Dispositif selon l'une des revendications précédentes, **caractérisé en ce que** l'appareil de détection (5) permet de palper les parties essentielles de l'expansion des pièces (6) dans au moins une direction spatiale (x, y).

14. Dispositif selon l'une des revendications précédentes, **caractérisé en ce que** l'appareil de détection (5) permet de palper les parties essentielles de la largeur des fonds de sachet et/ou des feuilles de garde de fond et/ou des étiquettes de valve.

15. Dispositif de fabrication de sachets ou de sachets semi-finis qui contient au moins un dispositif selon l'une des revendications précédentes.

16. Procédé de mesure et/ou de surveillance de caractéristiques d'expansion dans l'espace d'applications de colle (9) sur des pièces (6),
- lesquelles (9) sont appliquées de préférence lors de la fabrication de sachets ou de sachets semi-finis sur des pièces (6) en matériau cellulosique,
- un dispositif de rayonnement (1) étant présent, avec lequel les pièces (6) peuvent être irradiées avec un rayonnement électromagnétique d'une première plage de longueurs d'onde et d'une autre plage de longueurs d'onde,
- des propriétés du rayonnement électromagnétique (3) émis par les pièces pouvant être enregistrées avec un appareil de détection (5)
- des premières valeurs d'intensité lumineuse du rayonnement électromagnétique (3) réfléchi par les pièces (6) dans la première plage de longueur d'onde et des deuxièmes valeurs d'intensité lumineuse du rayonnement électromagnétique réfléchi par les pièces dans l'autre plage de longueur d'onde pouvant être enregistrées par l'appareil de détection (5),
- l'appareil de détection (5) permettant de relever les premières valeurs d'intensité lumineuse des zones encollées (9) et les deuxièmes valeurs d'intensité lumineuse des zones non encollées (15) des pièces (6),
- les premières et deuxièmes valeurs d'intensité lumineuse étant mises en relation les unes avec les autres et pouvant être prises en compte lors de la détermination ou de la surveillance de l'épaisseur de couche de colle,
**caractérisé en ce que**
- la partie à analyser de la surface des pièces est palpée avec au moins un réseau de capteurs,
- une analyse de portions de la surface (An) est réalisée au moyen d'un tramage de la surface de la pièce, une épaisseur de couche (D(An)) étant associée à chaque portion de la surface,
- et les valeurs mesurées sont signalées à un dispositif de commande (17) qui tient compte des valeurs mesurées lors de la génération de signaux de commande ou de régulation au dispositif d'application de colle (25).
